# EUROPEAN PATENT APPLICATION

(11) **EP 1 391 982 A2**
(43) Date of publication of application: **25.02.2004**
(21) Application number: 03019075.5
(22) Date of filing: 22.08.2003
(51) Int. Cl.: H02M 3/335

(54) **Dc-dc converter**

(30) Priority: 22.08.2002 JP 2002242267
(71) Applicant: Nissin Electric Co., Ltd., Kyoto-shi, Kyoto 615-8686 (JP)
(72) Inventor: Kurio, Nobuhiro c/o NISSIN ELECTRIC, Kyoto-shi Kyoto, 615-8686 (JP); Hasebe, Takaya c/o NISSIN ELECTRIC, Kyoto-shi Kyoto, 615-8686 (JP)
(74) Representative: Grünecker, Kinkeldey, Stockmair & Schwanhäusser Anwaltssozietät

(57) **Abstract**

Acircuit configuration in which a pair of conversion circuit parts (11,12) for converting a power source voltage of a DC power source (E) into an AC by two pairs of switching elements (Q₁₁,Q₁₂Q₁₃,Q₁₄, and Q₁₅,Q₁₆,Q₁₇,Q₁₈) made of a full bridge configuration are connected in parallel with the DC power source (E) and rectification circuit parts (13,14) are provided to the output sides of each of the conversion circuit parts (11,12) through transformers (Tr₁₁,Tr₁₂) and series capacitors (C₁₁,C₁₂) are inserted and connected between each of the conversion circuit parts (11,12) and the transformers (Tr₁₁,Tr₁₂) is used as unitary unit (A₁,A₂) and n groups of the unitary units (A₁,A₂) are provided with respect to the DC power source (E) and the transformer secondary sides of one rectification circuit part of each of the unitary units (A₁,A₂) are connected in series among the n groups and also the transformer secondary sides of the other rectification circuit parts (13,14) are connected in series among the n groups.

## Description

### Background of the Invention

### Field of the Invention

The present invention relates to a DC-DC converter, and particularly to a DC-DC converter which is used in a DC power source circuit and converts a power source voltage of a DC power source into a different DC voltage.

### Description of the Related Art

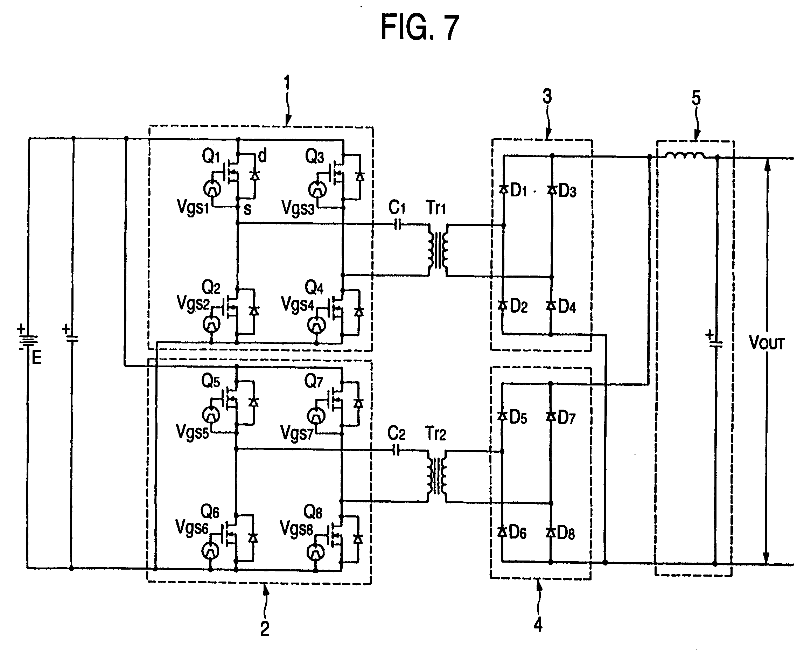

For example, one example of a DC-DC converter used in a DC power source circuit is shown in Fig. 7.

The DC-DC converter shown in Fig. 7 comprises a pair of conversion circuit parts 1, 2, two transformers Tr₁, Tr₂, a pair of rectification circuit parts 3, 4, and an LC smoothing circuit part 5. The pair of conversion circuit parts 1, 2 have two pairs of switching elements Q₁, Q₄, Q₂, Q₃ and Q₅, Q₈, Q₆, Q₇ which are connected by a full bridge configuration. The two transformers Tr₁, Tr₂ are connected to the output sides of the conversion circuit parts 1, 2. The pair of rectification circuit parts 3, 4 are connected to secondary side outputs of the transformers Tr₁, Tr₂ and are made of two pairs of diodes D₁, D₄, D₂, D₃ and D₅, D₈, D₆, D₇. The LC smoothing circuit part 5 is connected in common with the output sides of the rectification circuit parts 3, 4. In this DC-DC converter, a pair of the conversion circuit parts 1, 2 are connected in parallel with a DC power source E. Also, series capacitors C₁, C₂ are inserted and connected between the output sides of each of the conversion circuit parts 1, 2 and the primary sides of the transformers Tr₁, Tr₂.

In this DC-DC converter, the switching elements Q₁, Q₄, Q₂, Q₃ and Q₅, Q₈, Q₆, Q₇ of the conversion circuit parts 1, 2 are alternately turned on or off to obtain an AC waveform output. This AC waveform output of the conversion circuit parts 1, 2 is transformed by the transformers Tr₁, Tr₂ and the secondary side outputs of the transformers Tr₁, Tr₂ are rectified by the rectification circuit parts 3, 4 and also are smoothed by the LC smoothing circuit part 5. Therefore, a desired DC voltage V_{OUT} is generated (for example, see JP-A-2002-223565).

By the way, as means for increasing a conversion capacity of the DC-DC converter described above, means using a semiconductor device with large voltage and current or a large-size transformer in components forming the DC-DC converter can be implemented.

However, general versatility of the DC-DC converter decreases as a conversion capacity of a DC-DC converter single device providing the configuration shown in Fig. 7 is increased. That is, in the case of a DC-DC converter with a small single device capacity, it can cope with various capacities requiring a capacity larger than its small capacity and has flexibility, but in the case that a single device capacity is large, it becomes difficult to cope with applications requiring a capacity smaller than its large capacity.

Also, in the case of using a semiconductor device with large voltage and current in components forming the DC-DC converter, it was very difficult to obtain a semiconductor device with high speed and high performance, or in the case of using a large-size transformer, it was difficult to obtain things with good core characteristics.

Thus, the means for increasing a single device capacity of the DC-DC converter is undesirable because there are the problems described above. Therefore, as another means for increasing a conversion capacity of the DC-DC converter, it is considered that plural unitary units are connected in parallel with a DC power source E using a circuit configuration of the DC-DC converter shown in Fig. 7 as a unitary unit.

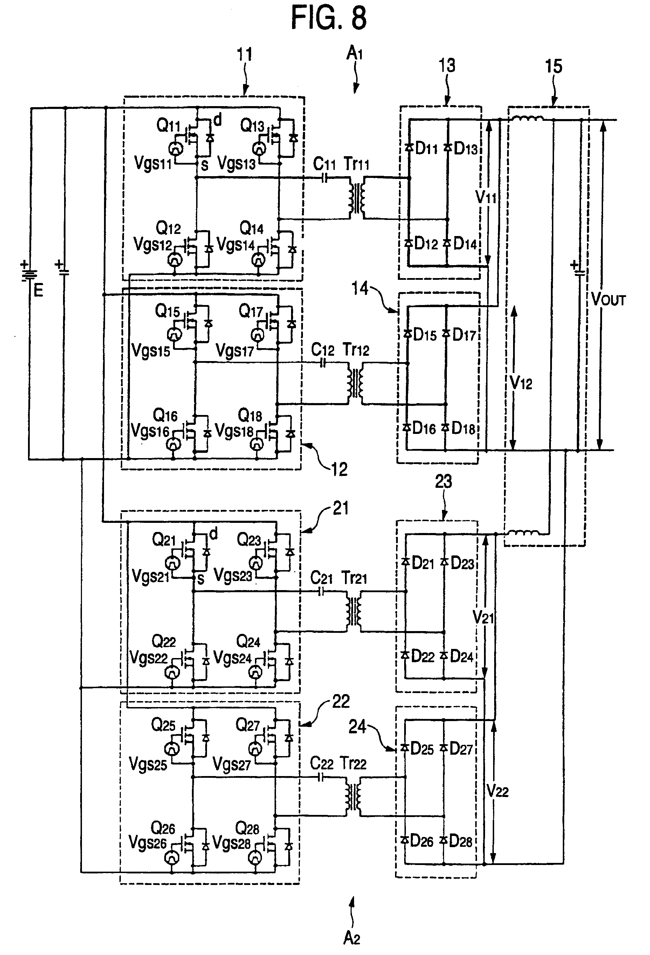

For example, a DC-DC converter having two unitary units A₁, A₂ which are connected in parallel with a DC power source E is shown in Fig. 8.

The unitary unit A₁ of the DC-DC converter shown in Fig. 8 provides a following configuration. That is, a pair of conversion circuit parts 11, 12 for converting a power source voltage of the DC power source E into an AC by switching elements Q₁₁ to Q₁₄ and Q₁₅ to Q₁₈ of a full bridge configuration are connected in parallel with the DC power source E. Rectification circuit parts 13, 14 made of diodes D₁₁ to D₁₄ and D₁₅ to D₁₈ are provided to the output sides of each of the conversion circuit parts 11, 12 through transformers Tr₁₁, Tr₁₂. Series capacitors C₁₁, C₁₂ are inserted and connected between each of the conversion circuit parts 11, 12 and the transformers Tr₁₁, Tr₁₂.

Also, the unitary unit A₂ has the same circuit configuration as that of the unitary unit A₁. That is, it comprises conversion circuit parts 21, 22 of parallel connection made of switching elements Q₂₁ to Q₂₄ and Q₂₅ to Q₂₈ of a full bridge configuration, and rectification circuit parts 23, 24 made of diodes D₂₁ to D₂₄ and D₂₅ to D₂₈ connected to the output sides of each of the conversion circuit parts 21, 22 through series capacitors C₂₁, C₂₂ and transformers Tr₂₁, Tr₂₂. Incidentally, an LC smoothing circuit part 15 is provided to the output sides of the rectification circuit parts 13, 14, 23, 24.

When the plural unitary units A₁, A₂ are connected in parallel with the DC power source E thus, without respectively increasing conversion capacities of the unitary units A₁, A₂ and using a semiconductor device with large voltage and current or a large-size transformer as components, a conversion capacity of the whole DC-DC converter can be increased.

However, in the DC-DC converter shown in Fig. 8, when the conversion circuit parts 11, 12, 21, 22 which are voltage sources are connected in parallel, a cross current flows between the conversion circuit parts by a slight difference in output voltages of the respective conversion circuit parts 11, 12, 21, 22. An output current of the DC-DC converter increases or decreases by this cross current and an unbalance state occurs and thereby overcurrent occurrence is caused. In order to equalize the output voltages of each of the conversion circuit parts 11, 12, 21, 22, a method for performing a feedback control of the output voltages of the conversion circuit parts 11, 12, 21, 22 or a method for suppressing a difference in output voltages by improving accuracy between components in each of the conversion circuit parts 11, 12, 21, 22 is considered. However, bad effects that a control circuit becomes complicated in the former method and an increase in component costs is caused in the latter method occur respectively.

### Summary of the Invention

Therefore, the invention is proposed in view of the problems, and an object of the invention is to provide a DC-DC converter which can prevent an output current of a DC-DC converter from becoming an unbalance state even when there is a slight difference in output voltages of each conversion circuit part in the case of increasing a conversion capacity of the DC-DC converter.

As technical means for achieving the object, according to the present invention, there is provided a DC-DC converter comprising:
n groups of the unitary units provided with respect to a DC power source, the unitary unit having a pair of conversion circuit parts for converting a power source voltage of the DC power source into an AC by switching elements of a full bridge configuration, rectification circuit parts provided to the output sides of each of the conversion circuit parts through transformers, and series capacitors inserted and connected between each of the conversion circuit parts and the transformers,
wherein transformer secondary sides of one rectification circuit parts of each the unitary unit are connected in series among the n groups and also transformer secondary sides of the other rectification circuit parts of each the unitary unit are connected in series among the n groups. A pair of the conversion circuit parts in then groups of the unitary units may be connected in parallel with the DC power source.

In a DC-DC converter according to the invention, by providing n groups of unitary units comprising a pair of conversion circuit parts, series capacitors, transformers and rectification circuit parts with respect to a DC power source, a conversion capacity of the DC-DC converter can be increased. In the case of increasing the conversion capacity of this DC-DC converter, by connecting the transformer secondary sides of one rectification circuit parts in n groups of the unitary units in series among the n groups and also connecting the transformer secondary sides of the other rectification circuit parts in series among the n groups, even when there is a slight difference in output voltages of each conversion circuit part, output shares of the transformer secondary sides of one rectification circuit parts and the transformer secondary sides of the other rectification circuit parts can be equalized, so that an output current of the DC-DC converter does not become an unbalance state.

Incidentally, the DC-DC converter has a configuration in which a pair of the conversion circuit parts in n groups of the unitary units are connected in parallel with the DC power source, but the invention is not limited to this. A configuration in which a pair of the conversion circuit parts are connected in series with the DC power source can also be used. Thus, in n groups of the unitary units having a pair of the conversion circuit parts connected in series with the DC power source, a configuration connected in either parallel or series with the DC power source can be used.

### Brief Description of the Drawings

Fig. 1 is a circuit diagram of a DC-DC converter in which two groups of unitary units having a pair of conversion circuit parts connected in parallel are connected in parallel in an embodiment of the invention;
Fig. 2 is a timing chart of gate signals for turning on or off each switching element of the DC-DC converter of Fig. 1;
Fig. 3 is a waveform chart of output voltages of rectification circuit parts of Fig. 1, primary side voltages of transformers, voltages between drain and source of each the switching element, and drain currents;
Fig. 4 is a table showing on-off states of each the switching element in one period of primary side voltage waveforms of the transformers of Fig. 3;
Fig. 5 is a circuit diagram showing a DC-DC converter in which two groups of unitary units having a pair of conversion circuit parts connected in series are connected in parallel in another embodiment of the invention;
Fig. 6 is a circuit diagram showing a DC-DC converter in which two groups of unitary units having a pair of conversion circuit parts connected in series are connected in series in a further embodiment of the invention;
Fig. 7 is a circuit diagram showing a related-art example of a DC-DC converter; and
Fig. 8 is a circuit diagram showing one example of a DC-DC converter of a premise of the invention.

### Detailed Description of the Invention

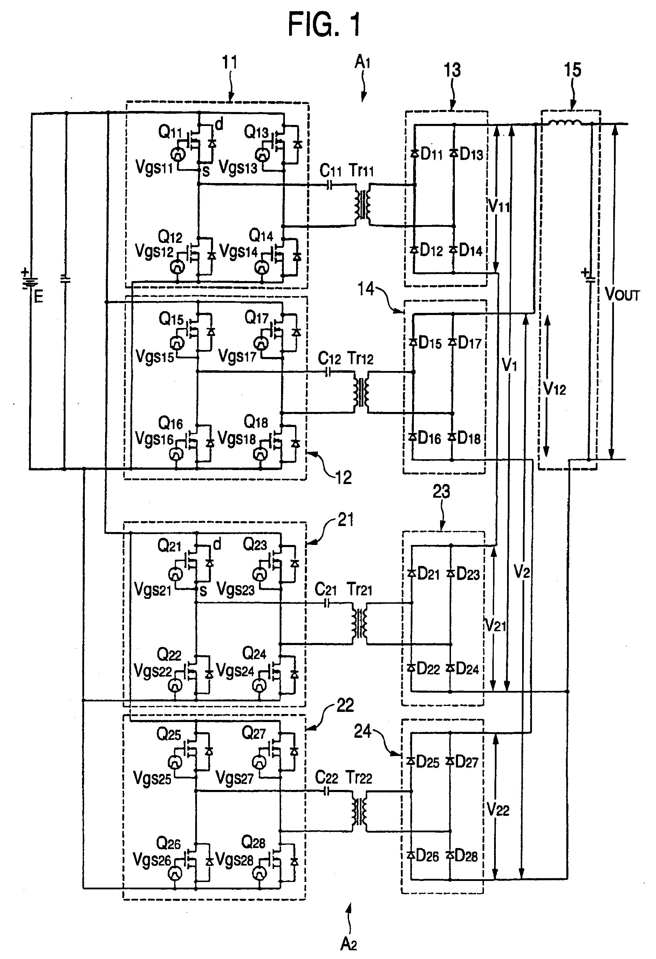

Fig. 1 is a circuit diagram of a DC-DC converter in an embodiment of the invention.

The DC-DC converter of this embodiment provides a circuit configuration in which n groups, for example, two groups of unitary units A₁, A₂ are connected in parallel with a DC power source E. Incidentally, three or more groups of unitary units can be provided.

One unitary unit A₁ provides a following configuration. That is, a pair of conversion circuit parts 11, 12 converts a power source voltage of the DC power source E into an AC by two pairs of switching elements Q₁₁, Q₁₄, Q₁₂, Q₁₃ and Q₁₅, Q₁₈, Q₁₆, Q₁₇ (for example, MOS-FET, bipolar transistor or IGBT) of a full bridge configuration. The pair of conversion circuit parts 11, 12 are connected in parallel with the DC power source E. Rectification circuit parts 13, 14 made of two pairs of diodes D₁₁, D₁₄, D₁₂, D₁₃ and D₁₅, D₁₈, D₁₆, D₁₇ are provided to the output sides of each of the conversion circuit parts 11, 12 through transformers Tr₁₁, Tr₁₂. Series capacitors C₁₁, C₁₂ are inserted and connected between each of the conversion circuit parts 11, 12 and the transformers Tr₁₁, Tr₁₂.

Also, the other unitary unit A₂ has the same circuit configuration as that of the unitary unit A₁. That is, it comprises two conversion circuit parts 21, 22, two transformers Tr₂₁, Tr₂₂, series capacitors C₂₁, C₂₂ and rectification circuit parts 23, 24. The two conversion circuit parts 21, 22 have two pairs of switching elements Q₂₁, Q₂₄, Q₂₂, Q₂₃ and Q₂₅, Q₂₈, Q₂₆, Q₂₇ (for example, MOS-FET, bipolar transistor or IGBT) which are connected by a full bridge configuration and are connected in parallel with the DC power source E. The two transformers Tr₂₁, Tr₂₂ are connected to each of the output sides of their conversion circuit parts 21, 22. The series capacitors C₂₁, C₂₂ are inserted and connected between the output sides of each of the conversion circuit parts 21, 22 and the primary sides of the transformers Tr₂₁, Tr₂₂. The rectification circuit parts 23, 24 are connected to secondary side outputs of the transformers Tr₂₁, Tr₂₂ and made of two pairs of diodes D₂₁, D₂₄, D₂₂, D₂₃ and D₂₅, D₂₈, D₂₆, D₂₇.

When the plural unitary units A₁, A₂ are connected in parallel with the DC power source E thus, without respectively increasing conversion capacities of the unitary units A₁, A₂ and using a semiconductor device with large voltage and current or a large-size transformer as components, a conversion capacity of the whole DC-DC converter can be increased.

An operation of one unitary unit A₁ in this DC-DC converter is as follows. Incidentally, an operation of the other unitary unit A₂ is similar, so that operation description of the other unitary unit A₂ will be omitted.

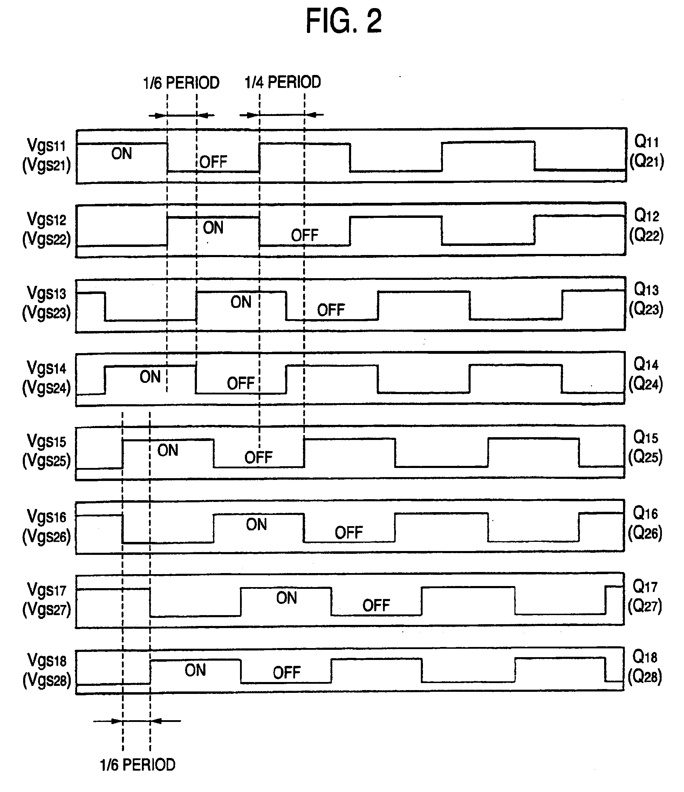

Fig. 2 shows a timing chart of gate signals Vgs₁₁ to Vgs₁₄, Vgs₁₅ to Vgs₁₈ for turning on or off each of the switching elements Q₁₁ to Q₁₄, Q₁₅ to Q₁₈ of the DC-DC converter. As shown in Fig. 2, the switching elements Q₁₁, Q₁₄, Q₁₂, Q₁₃ and Q₁₅, Q₁₈, Q₁₆, Q₁₇ of the conversion circuit parts 11, 12 are alternately turned on or off to obtain an AC waveform output. This AC waveform. output of the conversion circuit parts 11, 12 is transformed by the transformers Tr₁₁, Tr₁₂. The the secondary side of outputs the transformers Tr₁₁, Tr₁₂ are rectified by the rectification circuit parts 13, 14 made of the diodes D₁₁ to D₁₄, D₁₅ to D₁₈ and thereby, a desired DC voltage V_{OUT} is generated.

In the two conversion circuit parts 11, 12, as shown by the timing chart of Fig. 2, a switching phase of the other switching element Q₁₄ (the switching element Q₁₃ is inversion of the switching element Q₁₄) is delayed by a 1/3n period (1/6 period in the case of this embodiment) with respect to one switching element Q₁₁ (the switching element Q₁₂is inversion of the switching element Q₁₁) of the switching elements Q₁₁, Q₁₄ paired in one conversion circuit part 11.

Also, in the switching elements Q₁₁, Q₁₅ corresponding between the conversion circuit parts 11, 12, a switching phase of the switching element Q₁₅ (the switching element Q₁₆ is inversion of the switching element Q₁₅) of the other conversion circuit part 12 is delayed by a 1/2n period (1/4 period in the case of this embodiment) with respect to the switching element Q₁₁.

Further, a switching phase of the other switching element Q₁₈ (the switching element Q₁₇ is inversion of the switching element Q₁₈) is delayed by a 1/6 period with respect to one switching element Q₁₅ (the switching element Q₁₆ is inversion of the switching element Q₁₅) of the switching elements Q₁₅, Q₁₈ paired in the other conversion circuit part 12.

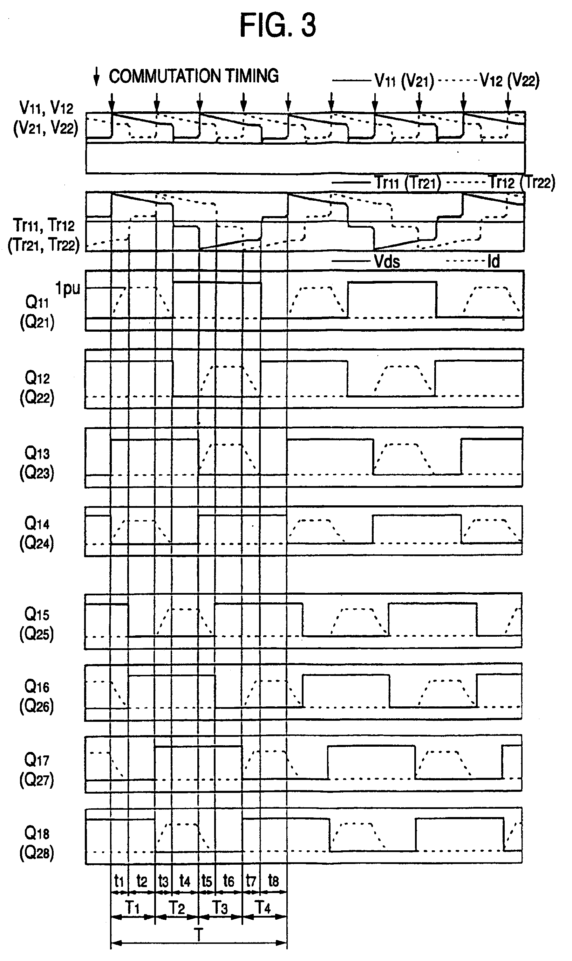

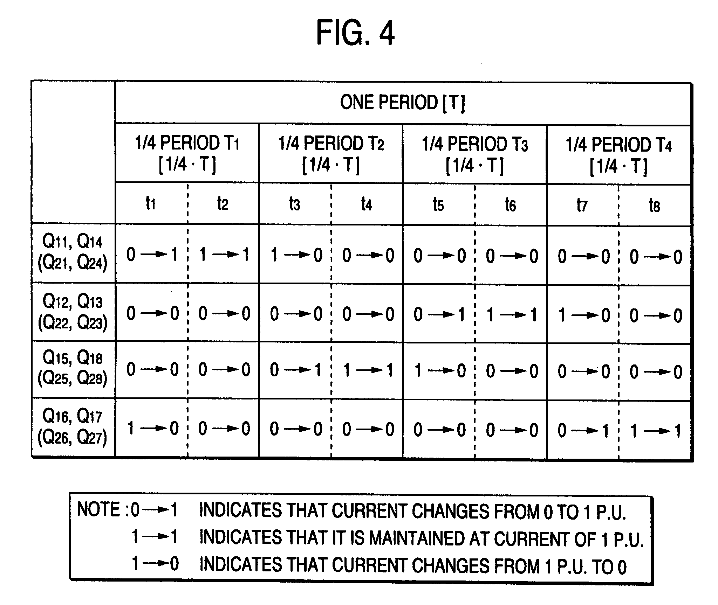

Fig. 3 is a waveform chart of respective output voltages V₁₁, V₁₂ of the rectification circuit parts 13, 14, primary side voltages of the transformers Tr₁₁, Tr₁₂, voltages Vds between drain and source of each of the switching elements Q₁₁ to Q₁₄, Q₁₅ to Q₁₈, and drain currents Id. The switching elements Q₁₁ to Q₁₄, Q₁₅ to Q₁₈ of the conversion circuit parts 11, 12 perform switching operations by the voltages Vds between drain and source and the drain currents Id as shown in Fig. 3 (see a table of Fig. 4) . Here, the table of Fig. 4 shows change and transition in current values of each of the switching elements Q₁₁ to Q₁₄, Q₁₅ to Q₁₈. Since constant electric power is supplied to a load, namely a constant current is supplied under a constant voltage output, the sum of output currents from the switching elements Q₁₁ to Q₁₄, Q₁₅ to Q₁₈ becomes a current value of 1 pu (per unit system) at any timing. That is, when the output current from the switching elements Q₁₁ to Q₁₄ of one conversion circuit part 11 changes from 0 to 1 pu at any timing, the output current from the switching elements Q₁₅ to Q₁₈ of the other conversion circuit part 12 changes from 1 to 0 pu. Also, when the output current from the switching elements Q₁₁ to Q₁₄ of one conversion circuit part 11 is 1 pu at another timing, the output current from the switching elements Q₁₅ to Q₁₈ of the other conversion circuit part 12 is 0 pu.

Incidentally, intervals t₁ to t₈ can be changed freely within conditions of 0<t₁≦1/4 · T, 0≦t₂<1/4 · T, 0<t₃≦1/4 · T, 0≦ t4<1/4 · T, 0<t₅≦1/4 · T, 0≦t₆<1/4 · T, 0<t₇≦1/4 · T, 0≦t₈< 1/4·T. The eight conditions are or conditions, but it is necessary to satisfy t₁+t₂+t₃+t₄+t₅+t₆+t₇+t₈=T. At intervals t₁, t₃, t₅, t₇ in which a current increases or decreases, a waveform depends on a circuit constant, so that it is actually limited to a range in which switching loss does not occur.

Absolute values of values obtained by multiplying primary side voltages (the second from the uppermost line of Fig. 3) of the transformers Tr₁₁, Tr₁₂ by a transformation ratio of the transformers Tr₁₁, Tr₁₂ by switching operations of each of the switching elements Q₁₁ to Q₁₄, Q₁₅ to Q₁₈ can be obtained as output voltages V₁₁, V₁₂ . That is, values (the uppermost line of Fig. 3) obtained by turning waveforms of the primary side voltages at a zero point can be obtained as output voltages V₁₁, V₁₂ in which secondary side voltages of the transformers Tr₁₁, Tr₁₂ are rectified by the diodes D₁₁ to D₁₄, D₁₅ to D₁₈ of the rectification circuit parts 13, 14. Further, output voltages V₂₁, V₂₂ of the rectification circuit parts 23, 24 can be obtained by the same way. A DC voltage V_{OUT} is generated by tracing output voltages V₁ (= V₁₁ + V₂₁), V₂ (= V₁₂ + V₂₂) which are obtained respectively by connecting the output voltages of the rectification circuit parts 13, 23 in series and by connecting the output voltages of the rectification circuit parts 14, 24 in series at the highest voltage value by commutation. This commutation is repeatedly performed in order of the switching elements Q₁₁, Q₁₄, the switching elements Q₁₅, Q₁₈, the switching elements Q₁₂, Q₁₃, the switching elements Q₁₆, Q₁₇, the switching elements Q₁₁, Q₁₄ with timing by arrows of Fig. 3.

By turning on or off these switching elements Q₁₁ to Q₁₄, Q₁₅ to Q₁₈ with timing at which the switching phase is shifted, such state in which the voltages Vds between drain and source are applied while the drain currents Id flow through the switching elements Q₁₁ to Q₁₄, Q₁₅ to Q₁₈ will not take place, and thus, the switching loss will not also occur. Also, the switching elements Q₁₃, Q₁₄, Q₁₇, Q₁₈ for triggering the commutation determine timing of the commutation, and even when these switching elements Q₁₃, Q₁₄, Q₁₇, Q₁₈ are turned on by giving gate signals, the drain currents Id do not reach the peak current immediately after the commutation due to leakage reactance of the transformers Tr₁₁, Tr₁₂ and a rise in the current is suppressed, so that turn-on switching loss does not occur.

Also, by inserting and connecting the series capacitors C₁₁, C₁₂ between the conversion circuit parts 11, 12 and the transformers Tr₁₁, Tr₁₂, droop (slope) is provided in a flat part of an output voltage of the conversion circuit parts 11, 12 and a voltage waveform with a high rise portion is formed and thereby a difference in voltage is increased before and after the time of commutation timing to ensure commutation operations. Further, a DC component included due to variations in on resistance or switching speed by individual differences in the switching elements Q₁₁ to Q₁₄, Q₁₅ to Q₁₈ can be cut to prevent DC bias excitation of the transformers Tr₁₁, Tr₁₂.

In the DC-DC converter of this embodiment, the unitary unit A₁ comprises a pair of the conversion circuit parts 11, 12, the series capacitors C₁₁, C₁₂, the transformers Tr₁₁, Tr₁₂ and the rectification circuit parts 13, 14. The unitary unit A₂ comprises a pair of the conversion circuit parts 21, 22, the series capacitors C₂₁, C₂₂, the transformers Tr₂₁, Tr₂₂ and the rectification circuit parts 23, 24. The unitary units A₁, A₂ are connected in parallel with the DC power source E. An LC smoothing circuit part 15 is connected in common with the output sides of their rectification circuit parts 13, 14, 23, 24.

The transformer secondary sides of one rectification circuit parts 13, 23 in two groups of the unitary units A₁, A₂ are connected in series between the two groups and also the transformer secondary sides of the other rectification circuit parts 14, 24 are connected in series between the two groups. Thus, by using a configuration in which the transformer secondary sides of one rectification circuit parts 13, 23 are connected in series between two groups of the unitary units A₁, A₂ and also the transformer secondary sides of the other rectification circuit parts 14, 24 are connected in series between two groups of the unitary units A₁, A₂, even when there is a slight difference in output voltages of each of the conversion circuit parts 11, 12, 21, 22 connected in parallel due to an increase in a conversion capacity of the DC-DC converter, output shares of the transformer secondary sides of one rectification circuit parts 13, 23 and the transformer secondary sides of the other rectification circuit parts 14, 24 can be equalized, so that an output current of the DC-DC converter does not become an unbalance state.

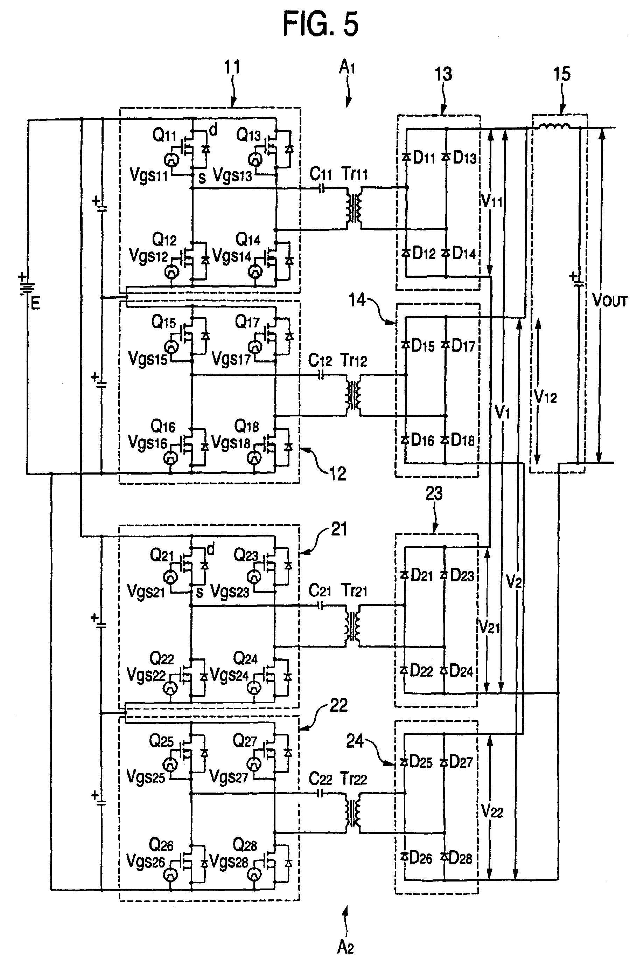

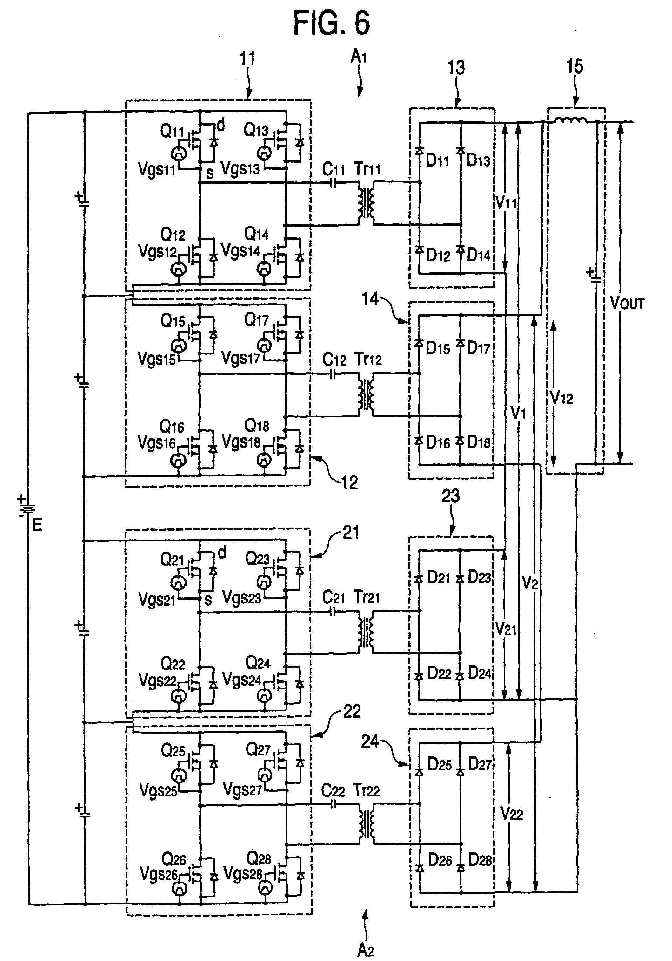

Incidentally, the DC-DC converter in the embodiment of Fig. 1 has a configuration in which each of a pair of the conversion circuit parts 11, 12 in the unitary unit A₁ and a pair of the conversion circuit parts 21, 22 in the unitary unit A₂ is connected in parallel with the DC power source E, but the invention is not limited to this. As shown in Figs. 5 and 6, a configuration in which each of a pair of the conversion circuit parts 11, 12 in the unitary unit A₁ and a pair of the conversion circuit parts 21, 22 in the unitary unit A₂ is connected in series with the DC power source E can also be used. Thus, in two groups of the unitary units A₁, A₂ having a pair of the conversion circuit parts 11, 12, 21, 22 which are connected in series with the DC power source E, any of a configuration connected in parallel with the DC power source E (see Fig. 5) or a configuration connected in series with the DC power source E (see Fig. 6) can be used.

According to the invention, by providing n groups of unitary units comprising a pair of conversion circuit parts, series capacitors, transformers and rectification circuit parts with respect to a DC power source, a conversion capacity of a DC-DC converter can be increased. In the case of increasing the conversion capacity of this DC-DC converter, by connecting the transformer secondary sides of one rectification circuit parts in n groups of the unitary units in series among the n groups and also connecting the transformer secondary sides of the other rectification circuit parts in series among the n groups, even when there is a slight difference in output voltages of each conversion circuit part, output shares of the transformer secondary sides of one rectification circuit parts and the transformer secondary sides of the other rectification circuit parts can be equalized without the need for a control circuit of current or a component with high accuracy. Therefore, an output current of the DC-DC converter does not become an unbalance state and a DC-DC converter with high performance can be provided.

## Claims

1. A DC-DC converter comprising:
n groups of the unitary units provided with respect to a DC power source, the unitary unit having a pair of conversion circuit parts for converting a power source voltage of the DC power source into an AC by switching elements of a full bridge configuration, rectification circuit parts provided to the output sides of each of the conversion circuit parts through transformers, and series capacitors inserted and connected between each of the conversion circuit parts and the transformers,
wherein transformer secondary sides of one rectification circuit parts of each the unitary unit are connected in series among the n groups and also transformer secondary sides of the other rectification circuit parts of each the unitary unit are connected in series among the n groups.

2. A DC-DC converter as defined in claim 1, wherein a pair of the conversion circuit parts in the n groups of the unitary units are connected in parallel with the DC power source.

3. A DC-DC converter as defined in claim 1, wherein a pair of the conversion circuit parts in the n groups of the unitary units are connected in series with the DC power source.

4. A DC-DC converter as defined in claim 3, wherein the n groups of the unitary units are connected in parallel with the DC power source.

5. A DC-DC converter as defined in claim 3, wherein the n groups of the unitary units are connected in series with the DC power source.
